# EUROPÄISCHE PATENTSCHRIFT

(11) **EP 2 919 942 B1**
(45) Veröffentlichungstag und Bekanntmachung des Hinweises auf die Patenterteilung: **22.02.2017**
(21) Anmeldenummer: 13744578.9
(22) Anmeldetag: 02.08.2013
(51) Int. Cl.: B23K 26/26, B23K 26/32

(54) **VERFAHREN ZUM LASERSCHWEISSEN EINES ODER MEHRERER WERKSTÜCKE AUS HÄRTBAREM STAHL IM STUMPFSTOSS UNTER VERWENDUNG EINES ZUSATZDRAHTES**
METHOD OF LASER WELDING ONE OR MORE WORKPIECES OF HARDENABLE STEEL WITH A BUTT JOINT USING A FILLER WIRE
PROCÉDÉ DE SOUDAGE LASER D'UNE OU PLUSIEURS PIÈCES EN ACIER TREMPABLE EN UTILISANT UN FIL D'APPORT

(30) Priorität: 19.11.2012 DE 102012111118
(43) Veröffentlichungstag der Anmeldung: 23.09.2015
(73) Patentinhaber: WISCO Tailored Blanks GmbH, 47259 Duisburg (DE)
(72) Erfinder: BREUER, Arndt, 47249 Duisburg (DE); BRANDT, Max, 47051 Duisburg (DE); SCHAFTINGER, Dietmar, 47495 Rheinberg (DE)
(74) Vertreter: Cohausz & Florack
(86) Internationale Anmeldenummer: PCT/EP2013/066274
(87) Internationale Veröffentlichungsnummer: WO 2014/075824

(56) Entgegenhaltungen:
- WO-A1-2012/007663
- WO-A1-2012/007664
- WO-A1-2012/079163
- US-A1- 2008 011 720

## Beschreibung

Die Erfindung betrifft ein Verfahren zum Laserschweißen eines oder mehrerer Werkstücke aus presshärtbarem Mangan-Bor-Stahl, im Stumpfstoß, gemäß dem Oberbegriff des Anspruchs 1 (siehe, z. B., CN202038371U).

Maßgeschneiderte Platinen aus Stahlblech (sogenannte Tailored Blanks) werden im Automobilbau verwendet, um hohe Anforderungen an die Crashsicherheit bei möglichst geringem Karosseriegewicht zu erfüllen. Hierzu werden einzelne Platinen oder Bänder unterschiedlicher Werkstoffgüte und/oder Blechdicke im Stumpfstoß durch Laserschweißen zusammengefügt. Auf diese Weise können verschiedene Stellen des fertigen Karosseriebauteils an unterschiedliche Belastungen angepasst werden. So können an Stellen mit hoher Belastung dickeres oder auch höherfestes Stahlblech und an den übrigen Stellen dünnere Bleche oder auch Bleche aus relativ weichen Tiefziehgüten eingesetzt werden. Durch solche maßgeschneiderten Blechplatinen werden zusätzliche Verstärkungsteile an der Karosserie überflüssig. Das spart Material und ermöglicht, das Gesamtgewicht der Karosserie zu reduzieren.

In den letzten Jahren wurden borlegierte Stähle, insbesondere Mangan-Bor-Stähle entwickelt, die beim Warmumformen mit rascher Abkühlung hohe Festigkeiten, beispielsweise Zugfestigkeiten im Bereich von 1500 bis 2000 MPa erreichen. Im Ausgangszustand haben Mangan-Bor-Stähle typischerweise ein ferritisch-perlitisches Gefüge und besitzen Festigkeiten von ca. 600 MPa. Durch Presshärten, d.h. durch Erwärmen auf Austenitisierungstemperatur und anschließendes rasches Abkühlen in der Formpresse kann jedoch ein martensitisches Gefüge eingestellt werden, so dass die so behandelten Stähle Zugfestigkeiten im Bereich von 1500 bis 2000 MPa erreichen können.

Die aus solchen maßgeschneiderten Stahlplatinen hergestellten Karosseriebauteile, beispielsweise B-Säulen, weisen bis zu einer gewissen Blechdicke bzw. einem gewissen Dickensprung einen einwandfreien Härteverlauf auf. Es wurde jedoch festgestellt, dass bei einer Blechdicke größer/gleich ca. 1,8 mm, insbesondere größer/gleich ca. 2,0 mm, bzw. einem Dickensprung größer/gleich ca. 0,4 mm das Problem auftritt, dass die Laserschweißnaht beim Warmumformen (Presshärten) nicht ausreichend aufhärtet. Im Bereich der Schweißnaht ergibt sich dann nur teilweise ein martensitisches Gefüge, so dass es bei Belastung des fertigen Bauteils zu einem Versagen in der Schweißnaht kommen kann. Dieses Problem hängt vermutlich damit zusammen, dass insbesondere bei einem Dickensprung in der Regel kein ausreichender Kontakt zu dem gekühlten Umformwerkzeug bzw. Kühlwerkzeug gewährleistet werden kann und sich dadurch die Schweißnaht nicht vollständig in Martensit umwandeln lässt.

In der US 2008/0011720 A1 ist ein Laser-Lichtbogen-Hybridschweißverfahren beschrieben, bei dem Platinen aus Mangan-Bor-Stahl, die eine Aluminium enthaltende Oberflächenschicht aufweisen, im Stumpfstoß miteinander verbunden werden, wobei der Laserstrahl mit mindestens einem elektrischen Lichtbogen kombiniert ist, um das Metall am Stumpfstoß aufzuschmelzen und die Platinen miteinander zu verschweißen. Der elektrische Lichtbogen wird dabei mittels einer Wolfram-Schweißelektrode abgegeben oder bildet sich bei Verwendung eines MIG-Schweißbrenners an der Spitze eines Zusatzdrahtes. Der Zusatzdraht kann Elemente (z.B. Mn, Ni und Cu) enthalten, welche die Umwandlung des Stahls in ein austenitisches Gefüge induzieren und eine Aufrechterhaltung der austenitischen Umwandlung im Schmelzbad begünstigen.

Mit diesem bekannten Laser-Lichtbogen-Hybridschweißverfahren soll erreicht werden, dass warmumformbare Platinen aus Mangan-Bor-Stahl, die mit einer Beschichtung auf Aluminium-Silizium-Basis versehen sind, ohne vorherige Entfernung des Beschichtungsmaterials im Bereich der herzustellenden Schweißnaht verschweißt werden können, wobei aber dennoch sichergestellt sein soll, dass an den Stoßkanten der Platinen befindliches Aluminium nicht zu einer Herabsetzung der Zugfestigkeit des Bauteils in der Schweißnaht führt. Durch das Vorsehen eines elektrischen Lichtbogens hinter dem Laserstrahl sollen das Schmelzbad homogenisiert und dadurch örtliche Aluminiumkonzentrationen größer 1,2 Gew.-%, die ein ferritisches Gefüge erzeugen, eliminiert werden.

Dieses bekannte Hybridschweißverfahren ist hinsichtlich des Energieverbrauchs aufgrund der Erzeugung des elektrischen Lichtbogens relativ aufwendig.

Der vorliegenden Erfindung liegt die Aufgabe zugrunde, ein Laserschweißverfahren anzugeben, mit dem Werkstücke aus presshärtbarem Stahl, insbesondere Mangan-Bor-Stahl, die eine Dicke von mindestens 1,8 mm aufweisen und/oder bei denen am Stumpfstoß ein Dickensprung von mindestens 0,4 mm entsteht, zu maßgeschneiderten Werkstücken, insbesondere maßgeschneiderten Platinen, im Stumpfstoß gefügt werden können, deren Schweißnaht sich beim Warmumformen (Presshärten) zuverlässig in ein martensitisches Gefüge aufhärten lässt. Zudem soll sich das Verfahren durch eine hohe Produktivität sowie einen relativ geringen Energieverbrauch auszeichnen.

Zur Lösung diese Aufgabe wird ein Verfahren mit den Merkmalen des Anspruchs 1 vorgeschlagen. Bevorzugte und vorteilhafte Ausgestaltungen des erfindungsgemäßen Verfahrens sind in den Unteransprüchen angegeben.

Das erfindungsgemäße Verfahren dient dem Laserschweißen eines oder mehrerer Werkstücke aus presshärtbarem Mangan-Bor-Stahl, im Stumpfstoß, bei dem das Werkstück oder die Werkstücke eine Dicke von mindestens 1,8 mm, insbesondere mindestens 2,0 mm aufweisen und/oder an dem Stumpfstoß ein Dickensprung von mindestens 0,4 mm entsteht. Das Laserschweißen erfolgt dabei unter Zuführen von Zusatzdraht in das mit einem Laserstrahl erzeugte Schmelzbad. Das erfindungsgemäße Verfahren ist ferner dadurch gekennzeichnet, dass der Zusatzdraht mindestens ein Legierungselement aus der Mangan, Chrom, Molybdän, Silizium und/oder Nickel umfassenden Gruppe enthält, das die Bildung von Austenit in dem mit dem Laserstrahl erzeugten Schmelzbad begünstigt, wobei dieses mindestens eine Legierungselement mit einem um mindestens 0,1 Gew.-% größeren Massenanteil im Zusatzdraht vorhanden ist als in dem presshärtbaren Stahl des Werkstückes oder der Werkstücke.

Die erfindungsgemäß hergestellten Werkstücke bzw. maßgeschneiderten Platinen bieten hinsichtlich der Warmumformung (Presshärtung) ein größeres Prozessfenster, in welchem eine ausreichende Aufhärtung des Bauteils, insbesondere auch in dessen Schweißnaht erzielt wird.

Das erfindungsgemäße Verfahren kann nicht nur beim Aneinanderfügen mehrerer Stahlplatinen unterschiedlicher Werkstoffgüte und/oder Blechdicke im Stumpfstoß zum Einsatz kommen, sondern beispielsweise auch beim Laserschweißen eines einzelnen platten- oder bandförmigen Stahlblechs, wobei im letztgenannten Fall die miteinander zu verschweißenden Kanten des Werkstücks durch Umformen, beispielsweise durch Abkanten oder Rollformen, aufeinander zu bewegt werden, so dass sie schließlich einander zugewandt im Stumpfstoß angeordnet sind.

In einer bevorzugten Ausgestaltung des erfindungsgemäßen Verfahrens werden das Werkstück bzw. die Werkstücke dahingehend ausgewählt, dass ihr Stahl folgende Zusammensetzung aufweist: 0,10 bis 0,50 Gew.-% C, max. 0,40 Gew.-% Si, 0,50 bis 2,00 Gew.-% Mn, max. 0,025 Gew.-% P, max. 0,010 Gew.-% S, max. 0,60 Gew.-% Cr, max. 0,50 Gew.-% Mo, max. 0,050 Gew.-% Ti, 0,0008 bis 0,0070 Gew.-% B, und min. 0,010 Gew.-% Al, Rest Fe und unvermeidbare Verunreinigungen. Die aus einem solchen Stahl hergestellten Bauteile weisen nach einem Presshärten eine relativ hohe Zugfestigkeit auf.

Besonders bevorzugt werden in dem erfindungsgemäßen Verfahren platinen- oder bandförmige Werkstücke aus presshärtbarem Stahl verwendet, die nach dem Presshärten eine Zugfestigkeit im Bereich von 1500 bis 2000 MPa aufweisen. Entsprechend der Erfindung weist der darin verwendete Zusatzdraht folgende Zusammensetzung auf:
0,05 bis 0,15 Gew.-% C, 0,5 bis 2,0 Gew.-% Si, 1,0 bis 2,5 Gew.-% Mn, 0,5 bis 2,0 Gew.-% Cr + Mo, und 1,0 bis 4,0 Gew.-% Ni, Rest Fe und unvermeidbare Verunreinigungen. Versuche haben gezeigt, dass sich mit einem solchen Zusatzdraht unter Anwendung des erfindungsgemäßen Verfahrens in besonders zuverlässiger Weise eine vollständige Umwandlung der Schweißnaht in ein martensitisches Gefüge beim anschließenden Presshärten sicherstellen lässt.

Entsprechend der Erfindung hat der darin verwendete Zusatzdraht einen um mindestens 0,1 Gew.-% geringeren Kohlenstoff-Massenanteil als der presshärtbare Stahl des Werkstückes oder der Werkstücke. Durch einen relativ niedrigen Kohlenstoffgehalt des Zusatzdrahtes kann eine Versprödung der Schweißnaht verhindert werden. Insbesondere lässt sich durch einen relativ niedrigen Kohlenstoffgehalt des Zusatzdrahtes eine gute Restdehnbarkeit an der Schweißnaht erzielen.

Eine weitere vorteilhafte Ausgestaltung des erfindungsgemäßen Verfahrens sieht vor, dass der Zusatzdraht in erwärmtem Zustand dem Schmelzbad zugeführt wird. Hierdurch lässt sich eine höhere Prozessgeschwindigkeit bzw. eine höhere Produktivität erzielen. Denn bei dieser Ausgestaltung muss mit dem Laserstrahl nicht so viel Energie aufgewendet werden, um den Zusatzdraht zu schmelzen. Vorzugsweise wird der Zusatzdraht vor dem Zuführen in das Schmelzbad zumindest in einem Längenabschnitt auf eine Temperatur von mindestens 50°C erwärmt.

Um eine Versprödung der Schweißnaht zu verhindern, sieht eine weitere bevorzugte Ausgestaltung des erfindungsgemäßen Verfahrens vor, dass das Schmelzbad während des Laserschweißens mit Schutzgas (Inertgas) beaufschlagt wird. Besonders bevorzugt wird dabei als Schutzgas reines Argon, Helium, Stickstoff oder deren Mischung oder ein Gemisch aus Argon, Helium, Stickstoff und/oder Kohlendioxid und/oder Sauerstoff verwendet.

Unbeschichtete Stahlplatinen oder Stahlbänder werden entsprechend der Erfindung miteinander verschweißt.

Alternativ werden beschichtete Stahlplatinen oder Stahlbänder verwendet, die mit einer Beschichtung auf Aluminium- oder Aluminium-Silizium-Basis versehen sind, wobei entsprechend der Erfindung die Beschichtung auf Aluminium- oder Aluminium-Silizium-Basis im Randbereich entlang den miteinander zu verschweißenden Stoßkanten vor dem Laserschweißen abgetragen wird. Dies kann mittels mindestens eines Energiestrahls, vorzugsweise eines Laserstrahls erfolgen. Ein mechanisches bzw. hochfrequentes (HF-) Entschichten ist ebenfalls denkbar. Auf diese Weise kann eine Beeinträchtigung der Schweißnaht durch andernfalls darin ungewollt eingebrachtes Beschichtungsmaterial zuverlässig verhindert werden, das beim Warmumformen (Presshärten) zu Einbrüchen im Härteverlauf führen kann bzw. würde.

Nachfolgend wird die Erfindung anhand einer Ausführungsbeispiele darstellenden Zeichnung näher erläutert. Es zeigen schematisch:
- Fig. 1: eine perspektivische Ansicht von Teilen einer Vorrichtung zur Durchführung des erfindungsgemäßen Laserschweißverfahrens, wobei zwei im Wesentlichen gleiche dicke, presshärtbare Stahlplatinen im Stumpfstoß miteinander verschweißt werden; und
- Fig. 2: eine perspektivische Ansicht von Teilen einer Vorrichtung zur Durchführung des erfindungsgemäßen Laserschweißverfahrens, wobei hier zwei unterschiedlich dicke, presshärtbare Stahlplatinen im Stumpfstoß miteinander verschweißt werden.

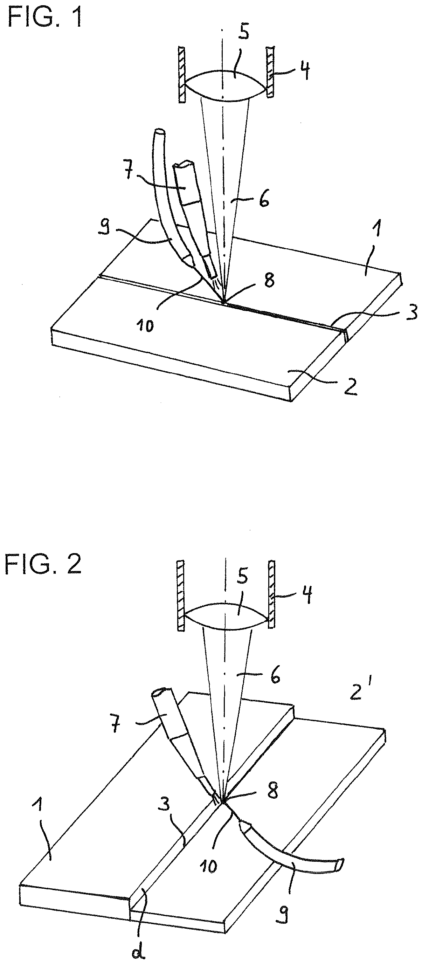

In Fig. 1 ist eine Vorrichtung schematisch dargestellt, mit der ein erfindungsgemäßes Laser-Schweißverfahren durchgeführt werden kann. Die Vorrichtung umfasst eine Unterlage (nicht gezeigt), auf der zwei Bänder oder Platinen 1, 2 aus Stahl unterschiedlicher Werkstoffgüte stumpf entlang des Fügestoßes 3 aneinanderstoßen. Beispielsweise besitzt das eine Werkstück 1 oder 2 eine relativ weiche Tiefziehgüte, während das andere Werkstück 2 bzw. 1 aus höherfestem Stahlblech besteht. Zumindest eines der Werkstücke 1, 2 ist aus presshärtbarem Stahl, beispielsweise aus Mangan-Bor-Stahl hergestellt.

Die Werkstücke 1, 2 sind im Wesentlichen gleich dick. Ihre Dicke beträgt mindestens 1,8 mm, beispielsweise mindestens 2,0 mm.

Oberhalb der Werkstücke 1, 2 ist ein Abschnitt eines Laserschweißkopfes 4 skizziert, der mit einer Optik (nicht gezeigt) zur Zuführung eines Laserstrahls sowie einer Fokussierlinse 5 für den Laserstrahl 6 versehen ist. Des Weiteren ist an dem Laserschweißkopf 4 eine Leitung 7 zur Zuführung von Schutzgas angeordnet. Die Mündung der Schutzgasleitung 7 ist im Wesentlichen auf den Fokusbereich des Laserstrahls 6 bzw. das mit dem Laserstrahl 6 erzeugte Schmelzbad 8 gerichtet. Als Schutzgas wird vorzugsweise reines Argon oder beispielsweise ein Gemisch aus Argon, Helium und/oder Kohlendioxid verwendet. Zudem ist dem Laserschweißkopf 4 eine Drahtzuführungseinrichtung 9 zugeordnet, mittels der dem Schmelzbad 8 ein spezielles Zusatzmaterial in Form eines Drahtes 10 zugeführt wird, das durch den Laserstrahl 6 ebenfalls aufgeschmolzen wird. Der Zusatzdraht 10 wird dem Schmelzbad 8 in erwärmtem Zustand zugeführt. Hierzu ist die Drahtzuführungseinrichtung 9 mit mindestens einem Heizelement (nicht gezeigt), beispielsweise einer den Draht 10 umgebenden Heizspirale ausgestattet. Mit dem Heizelement wird der Zusatzdraht 10 vorzugsweise auf eine Temperatur von mindestens 50°C, besonders bevorzugt auf mindestens 90°C aufgeheizt.

Das in Fig. 2 dargestellte Ausführungsbeispiel unterscheidet sich von dem Ausführungsbeispiel gemäß Fig. 1 dadurch, dass die Werkstücke 1, 2' verschieden dick sind, so dass an dem Stumpfstoß 3 ein Dickensprung d von mindestens 0,4 mm vorliegt. Beispielsweise besitzt das eine Werkstück 2' eine Blechdicke im Bereich von 0,5 mm bis 1,2 mm, während das andere Werkstück 1 eine Blechdicke im Bereich von 1,6 mm bis 2,5 mm aufweist. Darüber hinaus können sich die im Stumpfstoß 3 miteinander zu verbindenden Werkstücke 1, 2' auch in ihrer Werkstoffgüte voneinander unterscheiden. Beispielsweise ist die dickere Platine 1 aus höherfestem Stahlblech hergestellt, wohingegen die dünnere Stahlplatine 2' eine relativ weiche Tiefziehgüte besitzt.

Der presshärtbare Stahl, aus dem zumindest eines der miteinander im Stumpfstoß 3 zu verbindenden Werkstücke 1, 2 bzw. 2' besteht, kann beispielsweise folgende chemische Zusammensetzung aufweisen:
max. 0,45 Gew.-% C,
max. 0,40 Gew.-% Si,
max. 2,0 Gew.-% Mn,
max. 0,025 Gew.-% P,
max. 0,010 Gew.-% S,
max. 0,8 Gew.-% Cr + Mo,
max. 0,05 Gew.-% Ti,
max. 0,0050 Gew.-% B, und
min. 0,010 Gew.-% Al,
Rest Fe und unvermeidbare Verunreinigungen.

Die Werkstücke bzw. Stahlplatinen 1, 2 bzw. 2' können unbeschichtet oder mit einer Beschichtung, insbesondere Al-Si-Schicht versehen sein. Im Lieferzustand, d.h. vor einer Wärmebehandlung und schnellen Abkühlung, beträgt die Streckgrenze Re der presshärtbaren Stahlplatinen 1, 2 und/oder 2' vorzugsweise mindestens 300 MPa; ihre Zugfestigkeit Rm beträgt mindestens 480 MPa, und ihre Bruchdehnung A₈₀ liegt bei mindestens 10%. Nach dem Warmumformen (Presshärten), d.h. einem Austenitisieren bei ca. 900 bis 920°C und anschließendem schnellen Abkühlen, weisen diese Stahlplatinen eine Streckgrenze Re von ca. 1.100 MPa, eine Zugfestigkeit Rm von ca. 1.500 bis 2000 MPa und eine Bruchdehnung A₈₀ von ca. 5,0% auf.

Sofern die Werkstücke bzw. Stahlplatinen 1, 2 und/oder 2' mit einer Aluminiumbeschichtung, insbesondere mit einer Al-Si-Beschichtung versehen sind, wird entsprechend der Erfindung die Beschichtung im Randbereich entlang der miteinander zu verschweißenden Stoßkanten vor dem Laserschweißen abgetragen bzw. teilentschichtet. Gegebenenfalls wird auch an den Stoß- bzw. Schnittkanten 3 anhaftendes Aluminiumbeschichtungsmaterial entfernt. Das Abtragen (Entfernen) des Aluminiumbeschichtungsmaterials kann vorzugsweise mittels mindestens eines Laserstrahls erfolgen.

Der verwendete Zusatzdraht 10 weist entsprechend der Erfindung folgende chemische Zusammensetzung auf:
0,1 Gew.-% C,
0,8 Gew.-% Si,
1,8 Gew.-% Mn,
0,35 Gew.-% Cr,
0,6 Gew.-% Mo, und
2,25 Gew.-% Ni,
Rest Fe und unvermeidbare Verunreinigungen.

Der Mangan-Gehalt des Zusatzdrahtes 10 ist dabei entsprechend der Erfindung stets höher als der Mangan-Gehalt der presshärtbaren Werkstücke 1, 2 bzw. 2'. Vorzugsweise liegt der Mangan-Gehalt des Zusatzdrahtes 10 um ca. 0,2 Gew.-% höher als der Mangan-Gehalt der presshärtbaren Werkstücke 1, 2 bzw. 2'. Ferner ist es günstig, wenn auch Gehalt an Chrom und Molybdän des Zusatzdrahtes 10 höher als in den presshärtbaren Werkstücken 1, 2 bzw. 2' ist. Vorzugsweise liegt der kombinierte Chrom-Molybdän-Gehalt des Zusatzdrahtes 10 um ca. 0,2 Gew.-% höher als der kombinierte Chrom-Molybdän-Gehalt der presshärtbaren Werkstücke 1, 2 bzw. 2'. Der Nickelgehalt des Zusatzdrahtes 10 liegt entsprechend der Erfindung im Bereich von 1 bis 4 Gew.-%. Zudem weist der Zusatzdraht 10 entsprechend der Erfindung einen geringeren Kohlenstoffgehalt auf als der presshärtbare Stahl der Werkstücke 1, 2 bzw. 2'.

## Patentansprüche

1. Verfahren zum Laserschweißen eines oder mehrerer Werkstücke aus presshärtbarem Mangan-Bor-Stahl, im Stumpfstoß, bei dem das Werkstück oder die Werkstücke (1, 2; 1, 2') eine Dicke von mindestens 1,8 mm aufweisen und/oder an dem Stumpfstoß (3) ein Dickensprung (d) von mindestens 0,4 mm entsteht, **dadurch gekennzeichnet, dass** das Laserschweißen unter Zuführen von Zusatzdraht (10) in das ausschließlich mit einem Laserstrahl (6) erzeugte Schmelzbad (8) erfolgt, wobei der Zusatzdraht (10) mindestens ein Legierungselement aus der Mangan, Chrom, Molybdän, Silizium und/oder Nickel umfassenden Gruppe enthält, das die Bildung von Austenit in dem mit dem Laserstrahl (6) erzeugten Schmelzbad (8) begünstigt, wobei dieses mindestens eine Legierungselement mit einem um mindestens 0,1 Gew.-% größeren Massenanteil im Zusatzdraht (10) vorhanden ist als in dem presshärtbaren Stahl des Werkstückes oder der Werkstücke (1, 2; 1, 2'), wobei der Zusatzdraht (10) folgende Zusammensetzung aufweist:
0,05 - 0,15 Gew.-% C,
0,5 - 2,0 Gew.-% Si,
1,0 - 2,5 Gew.-% Mn,
0,5 - 2,0 Gew.-% Cr + Mo, und
1,0 - 4,0 Gew.-% Ni,
Rest Fe und unvermeidbare Verunreinigungen,
wobei der Zusatzdraht (10) einen um mindestens 0,1 Gew.-% geringeren Kohlenstoff-Massenanteil als der presshärtbare Stahl des Werkstückes oder der Werkstücke (1, 2; 1, 2') aufweist, und wobei das verwendete Werkstück oder die verwendeten Werkstücke (1, 2; 1, 2') unbeschichtet oder durch Abtragen seiner/ihrer Beschichtung im Randbereich entlang den miteinander zu verschweißenden Stoßkanten vor dem Laserschweißen teilentschichtet ist/sind.

2. Verfahren nach Anspruch 1, **dadurch gekennzeichnet, dass** der Stahl des Werkstückes oder der Werkstücke (1, 2; 1, 2') folgende Zusammensetzung aufweist:
0,10 - 0,50 Gew.-% C,
max. 0,40 Gew.-% Si,
0,50 - 2,00 Gew.-% Mn,
max. 0,025 Gew.-% P,
max. 0,010 Gew.-% S,
max. 0,60 Gew.-% Cr,
max. 0,50 Gew.-% Mo,
max. 0,050 Gew.-% Ti,
0,0008 - 0,0070 Gew.-% B, und
min. 0,010 Gew.-% Al,
Rest Fe und unvermeidbare Verunreinigungen.

3. Verfahren nach Anspruch 1 oder 2, **dadurch gekennzeichnet, dass** der Zusatzdraht (10) in erwärmtem Zustand dem Schmelzbad (8) zugeführt wird.

4. Verfahren nach Anspruch 3, **dadurch gekennzeichnet, dass** der Zusatzdraht (10) vor dem Zuführen in das Schmelzbad (8) zumindest in einem Längenabschnitt auf eine Temperatur von mindestens 50°C erwärmt wird.

5. Verfahren nach einem der Ansprüche 1 bis 4, **dadurch gekennzeichnet, dass** das Schmelzbad (8) während des Laserschweißens mit Schutzgas beaufschlagt wird.

6. Verfahren nach Anspruch 5, **dadurch gekennzeichnet, dass** als Schutzgas reines Argon oder ein Gemisch aus Argon und Kohlendioxid verwendet wird.

7. Verfahren nach einem der Ansprüche 1 bis 6, **dadurch gekennzeichnet, dass** das teilentschichtete Werkstück oder die teilentschichteten Werkstücke (1, 2; 1, 2') eine Oberflächenschicht auf Aluminium- oder Aluminium-Silizium-Basis aufweisen.

## Claims

1. A method for laser welding of one or more workpieces made from press hardenable manganese-boron steel, in a butt joint, in which the workpiece or the workpieces (1, 2; 1, 2') have a thickness of at least 1.8 mm and/or a jump in thickness (d) of at least 0.4 mm arises at the butt joint (3), **characterised in that** the laser welding takes place with the supply of filler wire (10) into the molten bath (8) generated exclusively with a laser beam (6), the filler wire (10) contains at least one alloy element from the group comprising manganese, chromium, molybdenum, silicon and/or nickel, which element promotes the formation of austenite in the molten bath (8) generated using the laser beam (6), wherein this at least one alloy element is present in the filler wire (10) with a mass proportion that is larger by 0.1 % by weight than in the press hardenable steel of the workpiece or the workpieces (1, 2; 1, 2'), wherein the filler wire (10) has the following composition:
0.05 - 0.15 % by weight C,
0.5 - 2.0 % by weight Si,
1.0 - 2.5 % by weight Mn,
0.5 - 2.0 % by weight Cr + Mo, and
1.0 - 4.0 % by weight Ni,
remainder Fe and unavoidable impurities,
wherein the filler wire (10) has a carbon mass proportion that is lower by at least 0.1 % by weight than the press hardenable steel of the workpiece or the workpieces (1, 2; 1, 2'), and wherein the workpiece used or the workpieces used (1, 2; 1, 2') are uncoated or, by removing in the edge region along the abutting edges to be welded to one another before the laser welding, are partly de-layered.

2. The method according to claim 1, **characterised in that** the steel of the workpiece or the workpieces (1, 2; 1, 2') has the following composition:
0.10 - 0.50 % by weight C,
max. 0.40 % by weight Si,
0.50 - 2.00 % by weight Mn,
max. 0.025 % by weight P,
max. 0.010 % by weight S,
max. 0.60 % by weight Cr,
max. 0.50 % by weight Mo,
max. 0.050 % by weight Ti,
max. 0.0008 - 0.0070 % by weight B, and
min. 0.010 % by weight Al,
remainder Fe and unavoidable impurities.

3. The method according to claim 1 or claim 2, **characterised in that** the filler wire (10) is supplied to the molten bath (8) in a heated state.

4. The method according to claim 3, **characterised in that** the filler wire (10) is heated to a temperature of at least 50 °C, at least in a length section, before supply into the molten bath (8).

5. The method according to one of claims 1 to 4, **characterised in that** the molten bath (8) is loaded with protective gas during the laser welding.

6. The method according to claim 5, **characterised in that** pure argon or a mixture of argon and carbon dioxide is used as protective gas.

7. The method according to one of claims 1 to 6, **characterised in that** the partly de-layered workpiece or the partly de-layered workpieces (1, 2; 1, 2') have a surface layer with an aluminium or aluminium/silicon basis.

## Revendications

1. Procédé de soudage au laser, bout à bout, d'une ou de plusieurs pièces d'usinage en acier au bore et au manganèse, ledit acier pouvant être trempé à la presse, procédé dans lequel la pièce d'usinage ou les pièces d'usinage (1, 2 ; 1, 2') présentent une épaisseur au moins de 1,8 mm et/ou, au niveau du joint bout à bout (3), il y a un écart d'épaisseur (d) au moins de 0,4 mm,
**caractérisé en ce que** le soudage au laser est réalisé en amenant un fil d'apport (10) dans le bain de fusion (8) produit exclusivement avec un rayon laser (6), où le fil d'apport (10) contient au moins un élément d'alliage provenant du groupe comprenant du manganèse, du chrome, du molybdène, du silicium et/ou du nickel, élément d'alliage qui favorise la formation d'austénite dans le bain de fusion (8) produit avec le rayon laser (6), où cet élément d'alliage au moins au nombre de un est présent en ayant, dans le fil d'apport (10), une proportion en masse au moins de 0,1 % en poids supérieure à celle dans l'acier - pouvant être trempé à la presse - de la pièce d'usinage ou des pièces d'usinage (1, 2 ; 1, 2'), où le fil d'apport (10) présente la composition suivante :
0,05 % - 0,15 % en poids de C,
0,5 % - 2,0 % en poids de Si,
1,0 % - 2,5 % en poids de Mn,
0,5 % - 2,0 % en poids de Cr + Mo, et
1,0 % - 4,0 % en poids de Ni,
contenant du fer (Fe) résiduel et des impuretés inévitables,
où le fil d'apport (10) présente une proportion en masse de carbone au moins de 0,1 % en poids plus faible que l'acier
- pouvant être trempé à la presse - de la pièce d'usinage ou des pièces d'usinage (1, 2 ; 1, 2'), et où la pièce d'usinage utilisée ou les pièces d'usinage utilisées (1, 2 ; 1, 2') est ou sont non recouverte(s) ou bien est ou sont partiellement dénudée(s), avant le soudage au laser, par enlèvement de son / de leur revêtement dans la zone de bordure le long des arêtes placées bout à bout, lesdites arêtes devant être soudées l'une avec l'autre ou les unes avec les autres.

2. Procédé selon la revendication 1, **caractérisé en ce que** l'acier de la pièce d'usinage ou des pièces d'usinage (1, 2; 1, 2') présente la composition suivante :
0,10 % - 0,50 % en poids de C,
au maximum 0,40 % en poids de Si,
0,50 % - 2,00 % en poids de Mn,
au maximum 0,025 % en poids de P,
au maximum 0,010 % en poids de S,
au maximum 0,60 % en poids de Cr,
au maximum 0,50 % en poids de Mo,
au maximum 0,050 % en poids de Ti,
0,0008 % - 0,0070 % en poids de B, et
au minimum 0,010 % en poids de Al,
contenant du fer (Fe) résiduel et des impuretés inévitables.

3. Procédé selon la revendication 1 ou 2, **caractérisé en ce que** le fil d'apport (10) est fourni au bain de fusion (8), à l'état chauffé.

4. Procédé selon la revendication 3, **caractérisé en ce que** le fil d'apport (10), avant d'être amené dans le bain de fusion (8), est chauffé au moins sur une section de longueur, à une température au moins de 50°C.

5. Procédé selon l'une quelconque des revendications 1 à 4,
**caractérisé en ce que** le bain de fusion (8) est, au cours du soudage au laser, alimenté en gaz inerte.

6. Procédé selon la revendication 5, **caractérisé en ce que** l'on utilise, comme gaz inerte, de l'argon pur ou un mélange d'argon et de dioxyde de carbone.

7. Procédé selon l'une quelconque des revendications 1 à 6,
**caractérisé en ce que** la pièce d'usinage partiellement dénudée ou les pièces d'usinage partiellement dénudées (1, 2 ; 1, 2') présente(nt) une couche de surface à base d'aluminium ou à base de silicium et d'aluminium.
